# EUROPEAN PATENT APPLICATION

(11) **EP 4 806 539 A1**
(43) Date of publication of application: **16.09.2026**
(21) Application number: 24889036.0
(22) Date of filing: 01.11.2024
(51) Int. Cl.: B01D 53/22, B01D 53/62, C01B 32/50, F25J 1/00

(54) **CARBON DIOXIDE CAPTURE SYSTEM**

(30) Priority: 08.11.2023 KR 20230153211
(71) Applicant: Korea Gas Corporation, Daegu 41062 (KR)
(72) Inventor: KIM, Bong Gyu, Suwon-si, Gyeonggi-do 16433 (KR); WOO, Kyung Taek, Ansan-si, Gyeonggi-do 15328 (KR); SO, Young Seok, Suwon-si, Gyeonggi-do 16376 (KR); PARK, Seoung Soo, Ansan-si, Gyeonggi-do 15596 (KR)
(74) Representative: Cabinet Beau de Loménie
(86) International application number: PCT/KR2024/016987
(87) International publication number: WO 2025/100848

(57) **Abstract**

Disclosed herein is a carbon dioxide capture system capable of capturing high-concentration carbon dioxide in flue gas emitted from a carbon emission source using a simple structure. The carbon dioxide capture system includes: an ambient temperature membrane configured to primarily capture carbon dioxide in flue gas transferred from a carbon emission source generating flue gas containing carbon dioxide; a membrane contactor configured to secondarily capture carbon dioxide in residual flue gas remaining after primary separation and removal of carbon dioxide by the ambient temperature membrane, the membrane contactor capturing carbon dioxide by a different mechanism from the ambient temperature membrane; and a mixer configured to mix the carbon dioxide separated by the ambient temperature membrane with the carbon dioxide separated by the membrane contactor to generate high-concentration carbon dioxide.

## Description

### [Technical Field]

The present invention relates to a carbon dioxide capture system capable of capturing high-concentration carbon dioxide in flue gas emitted from a carbon emission source using a simple structure.

### [Background Art]

As the world aims for carbon neutrality, there is growing interest in carbon dioxide capture alongside blue hydrogen production, leading to utilization of various carbon capture and storage (CCS) technologies.

CCS technologies for capturing carbon dioxide from flue gas emitted as a result of combustion of a fuel typically include a wet absorption method, a dry absorption method, and a membrane method.

The wet absorption method uses amines to capture carbon dioxide, while the dry absorption method uses a solid absorbent to capture carbon dioxide. These two approaches share a similar operating mechanism.

Although the wet absorption method and the dry absorption method can capture high concentration carbon dioxide, these methods are not economically viable for use at small-to-medium-scale carbon emission sites due to large footprints and the necessity for tall absorption towers.

In particular, since carbon dioxide is dispersed in an absorbent in an absorption tower, the wet absorption method offers a high mass transfer rate and a large gas-liquid contact area. However, the wet absorption method suffers from several drawbacks in that the absorption tower can be exceedingly large and operational problems, such as flooding of the absorbent or channeling, can arise. Moreover, since there is a risk of leakage of amine used as an absorbent in the absorption tower, care must be taken regarding the health and safety of local residents and potential environmental pollution.

The membrane method utilizes a membrane that selectively captures carbon dioxide. In addition, the membrane method does not use any chemicals, making it more eco-friendly than the wet and dry absorption methods. Furthermore, the membrane method does not require a phase change of a fluid, unlike the wet absorption method, thus enabling a compact system design, and is economically advantageous for use at small-to-medium-scale carbon emission sources due to ease of installation, operation, and maintenance.

However, the membrane method has a drawback of relatively low capture efficiency due to the lack of ability to capture carbon dioxide thoroughly.

The concentration of carbon dioxide in the flue gas resulting from combustion of hydrocarbon fuels at small-to-medium-scale carbon emission sources is known to range from about 13% to 20% on average. Considering the CO₂ concentration and infrastructure constraints at small-to-medium-scale emission sites, a facility for the capture process must have a small footprint. Consequently, the membrane method is preferred over the wet absorption method or the dry absorption method.

### [Disclosure]

### [Technical Problem]

Since low-temperature membranes operating in a low-temperature environment have higher capture efficiency than ambient temperature membranes operating in an ambient environment, a technology utilizing a low-temperature membrane by recovering latent heat of vaporization from liquefied natural gas fuel may be considered. However, this technology is limited in that it can only be used at carbon emission sources where liquefied natural gas is utilized.

While employing high-performance membranes with good material characteristics, like low-temperature membranes, may be an option to improve carbon dioxide capture efficiency using a membrane method, design of an efficient capture process is also an important consideration.

For example, to capture high-concentration carbon dioxide emitted from a carbon emission source using an ambient temperature membrane, a multi-stage membrane process consisting of at least three stages is required since a single-stage membrane process alone is insufficient to achieve carbon dioxide recovery with high purity and high recovery rate.

A multi-stage membrane system requires additional devices in each stage, such as compressors and vacuum pumps, along with a separation membrane and pipes for connecting these devices, which leads to problems such as increased cost and complicated process design.

Moreover, when the number of stages increases, leading to an increased count of separation membranes and additional devices, a high carbon dioxide flow rate into the capture process is required for efficiency. Consequently, such a multi-stage membrane system may be unsuitable for use at small-to-medium-scale carbon emission sources.

In order to solve these problems in the art, the present invention provides an economical and safe carbon dioxide capture system that is applicable to small-to-medium-scale carbon emission sources, is capable of capturing high-concentration carbon dioxide, and has a simple structure.

### [Technical Solution]

In accordance with one aspect of the present invention, a carbon dioxide capture system includes: an ambient temperature membrane configured to primarily capture carbon dioxide in flue gas transferred from a carbon emission source generating flue gas containing carbon dioxide; a membrane contactor configured to secondarily capture carbon dioxide in residual flue gas remaining after primary separation and removal of carbon dioxide by the ambient temperature membrane, the membrane contactor capturing carbon dioxide by a different mechanism from the ambient temperature membrane; and a mixer configured to mix the carbon dioxide separated by the ambient temperature membrane with the carbon dioxide separated by the membrane contactor to generate high-concentration carbon dioxide.

Preferably, the carbon dioxide capture system further includes: a carbon dioxide liquefaction unit configured to liquefy the high-concentration carbon dioxide generated by the mixer.

Preferably, the carbon dioxide capture system further includes: a recirculation line through which non-condensed carbon dioxide not liquefied in the carbon dioxide liquefaction unit is supplied back to the ambient temperature membrane to increase a pressure at an entrance through which the flue gas is introduced into the ambient temperature membrane.

Preferably, the ambient temperature membrane includes: a separation membrane operating at ambient temperature and allowing selective permeation of carbon dioxide; an inlet through which the flue gas is introduced to one side of the separation membrane; a permeate outlet disposed at the other side of the separation membrane and allowing high-concentration carbon dioxide having passed through the separation membrane to be discharged therethrough; and a retentate outlet through which residual flue gas consisting of other components not passing through the separation membrane is discharged to be supplied to the membrane contactor.

Preferably, the membrane contactor includes: a gas phase passage through which the residual flue gas transferred from the ambient temperature membrane flows; a liquid phase passage through which an absorbent flows; and at least one contact membrane mediating contact between the absorbent and the residual flue gas while separating the liquid phase passage and the gas phase passage from each other
Preferably, the membrane contactor further includes: a gas phase inlet through which the residual flue gas is introduced into the gas phase passage; a gas phase outlet through which a venting gas resulting from removal of carbon dioxide from the residual flue gas by the absorbent is discharged from the gas phase passage; a liquid phase inlet through which a lean absorbent is introduced into the liquid phase passage; a liquid phase outlet through which a rich absorbent having carbon dioxide dissolved therein is discharged from the liquid phase passage; a gas flow regulation unit provided to at least one of the gas phase inlet and the gas phase outlet to regulate a flow of gas; and a liquid flow regulation unit provided to at least one of the liquid phase inlet and the liquid phase outlet to regulate a flow of liquid.

Preferably, capacity of the membrane contactor is adjusted by controlling at least one of the gas flow regulation unit and the liquid flow regulation unit.

### [Advantageous Effects]

The carbon dioxide capture system according to the present invention only requires a small footprint and thus can be used even at small-to-medium-scale carbon emission sources where the available site area is limited, such as power plants or process facilities where carbon-intensive processes are carried out.

In addition, by placing an ambient temperature membrane and a membrane contactor, which utilize different carbon dioxide capture mechanisms, in a series arrangement, the carbon dioxide capture system benefits from the advantages of both capture devices while mutually compensating for the shortcomings of each method, thereby creating a synergistic effect.

In addition, by combining an ambient temperature membrane with a membrane contactor, the carbon dioxide capture system enables construction of an efficient carbon dioxide capture process that is operable at ambient temperature, features a simple configuration, and has no limitations regarding application sites.

In addition, while utilizing an ambient temperature membrane, the carbon dioxide capture system can compensate for the drawbacks of the ambient temperature membrane, thus enabling capture of high-concentration carbon dioxide.

### [Description of Drawings]

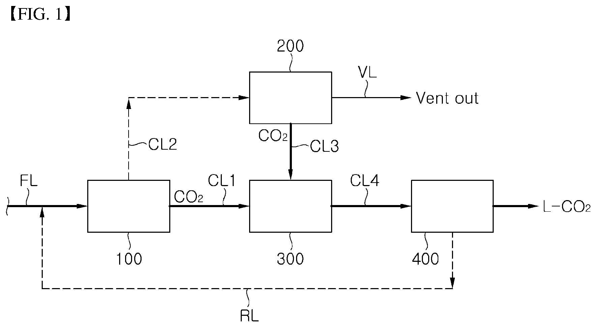

FIG. 1 is a schematic block diagram of a carbon dioxide capture system according to one embodiment of the present invention.

### [Best Mode]

In order to fully appreciate the operational advantages of the present invention and the objectives achieved by practicing the present invention, reference should be made to the accompanying drawings, which illustrate preferred embodiments of the present invention, and description thereof.

Hereinafter, exemplary embodiments of the present invention will be described in detail in terms of the features and effects thereof with reference to the accompanying drawings. It should be noted that like components will be denoted by like reference numerals throughout the specification and the accompanying drawings.

Hereinafter, a carbon dioxide capture system according to one embodiment of the present invention will be described with reference to FIG. 1.

Referring to FIG. 1, the carbon dioxide capture system according to one embodiment of the present invention may include: a flue gas line FL connected to a carbon emission source (not shown) generating flue gas containing carbon dioxide to transfer the flue gas from the carbon emission source; an ambient temperature membrane 100 configured to primarily capture carbon dioxide in the flue gas introduced through the flue gas line FL; and a membrane contactor 200 configured to secondarily capture carbon dioxide from a residual flue gas remaining after primary separation and removal of carbon dioxide by the ambient temperature membrane 100.

Although the temperature and concentration of the flue gas introduced into the ambient temperature membrane 100 through the flue gas line FL according to this embodiment are not restricted, the flue gas may be, for example, at ambient temperature.

The carbon emission source according to this embodiment may include not only traditional heavy carbon emission sources, such as thermal power plants, petrochemical plants, and steel plants, but also any plant that generates flue gas as a mixed gas containing carbon dioxide, such as natural gas or biogas refining plants, hydrogen production plants, and fuel cell power generation plants, irrespective of the scale, purpose, or industry thereof.

The ambient temperature membrane 100 according to this embodiment may include: a separation membrane (not shown) operating at ambient temperature and allowing selective permeation of carbon dioxide; an inlet (not shown) connected to the flue gas line FL and allowing the flue gas transferred through the flue gas line FL to be introduced to one side of the separation membrane therethrough; a permeate outlet (not shown) disposed at the other side of the membrane and allowing carbon dioxide having passed through the separation membrane to be discharged therethrough; and a retentate outlet (not shown) allowing a residual flue gas, that is, a mixed gas consisting of components that did not pass through the separation membrane, to be discharged therethrough.

The gas discharged through the permeate outlet is pure carbon dioxide or high-concentration carbon dioxide, and may be transferred to a carbon dioxide demand site through a high-concentration carbon dioxide line CL1.

The residual flue gas discharged through the retentate outlet may be a low-concentration carbon dioxide-containing mixed gas containing a trace amount of carbon dioxide, nitrogen, and the like.

According to this embodiment, the residual flue gas resulting from separation of carbon dioxide by the ambient temperature membrane 100 is transferred to the membrane contactor 200 through a low-concentration carbon dioxide line CL2 connecting the retentate outlet of the ambient temperature membrane 100 to the membrane contactor 200.

The membrane contactor 200 according to this embodiment may include: a gas phase passage (not shown) through which the residual flue gas transferred from the retentate outlet of the ambient temperature membrane 100 flows; a liquid phase passage (not shown) through which an absorbent flows; and a contact membrane (not shown) mediating contact between the absorbent and the residual flue gas while separating the liquid phase passage and the gas phase passage from each other.

In the membrane contactor 200, mass transfer occurs between a liquid absorbent flowing at one side of the contact membrane and carbon dioxide contained in the gaseous residual flue gas flowing at the other side of the contact membrane by chemical reaction therebetween, thereby allowing the carbon dioxide to be dissolved in the liquid absorbent.

The membrane contactor 200 may include one or more contact membranes, wherein the liquid phase passage and the gas phase passage may be disposed at opposite sides of each contact membrane, respectively, and neighboring contact membranes may share the gas phase passage or the liquid phase passage.

Uniform distribution of one or more contact membranes within the membrane contactor 200 enhances a mass transfer area and permeation performance, thereby allowing more efficient carbon dioxide capture.

The absorbent flowing through the liquid phase passage may be a liquid substance that selectively absorbs and separates carbon dioxide from the residual flue gas. For example, the absorbent may include pure water, sodium hydroxide (NaOH), and a carbonate-based or amine-based carbon dioxide absorption solution.

The membrane contactor 200 may further include: a gas phase inlet (not shown) through which the residual flue gas is introduced into the gas phase passage; a gas phase outlet (not shown) through which the residual flue gas remaining after removal of carbon dioxide by the absorbent, that is, a venting gas, is discharged from the gas phase passage; a liquid phase inlet (not shown) through which a lean absorbent is introduced into the liquid phase passage; and a liquid phase outlet (not shown) through which a rich absorbent having carbon dioxide dissolved therein is discharged from the liquid phase passage.

At least one of the gas phase inlet and the gas phase outlet according to this embodiment may be provided with a gas flow regulation unit (not shown) configured to regulate a flow of gas.

In addition, at least one of the liquid phase inlet and the liquid phase outlet may be provided with a liquid flow regulation unit (not shown) configured to regulate a flow of liquid.

According to this embodiment, since the flow (flow rate or pressure) of a fluid introduced into the membrane contactor 200 or a fluid discharged from the membrane contactor 200 can be independently controlled using the gas flow regulation unit and the liquid flow regulation unit, the separation process can be carried out stably even at fluid flow rates above or below a flow rate fluid flow rates restricted to prevent flooding or channeling in typical absorption towers, while facilitating adjustment of capture capacity.

Furthermore, to ensure that the residual flue gas and the absorbent flow in a counter-current direction within the membrane contactor 200, the liquid phase inlet may be disposed at one side of the membrane contactor 200 and the gas phase inlet may be disposed at the other side of the membrane contactor 200.

The gas phase inlet is connected to the low-concentration carbon dioxide line CL2 such that the residual flue gas discharged through the retentate outlet of the ambient temperature membrane 100, that is, a mixed gas containing low-concentration carbon dioxide, can be introduced into the gas phase inlet of the membrane contactor 200 through the low-concentration carbon dioxide line CL2.

The capacity of the membrane contactor 200 according to this embodiment may be determined based on permeation performance of the ambient temperature membrane 100, such as a separation factor.

The carbon dioxide capture system according to this embodiment may further include a vent line VL extending from the gas phase outlet of the membrane contactor 200 to allow the venting gas to be discharged from the gas phase outlet to the atmosphere. The venting gas may be a nitrogen-rich gas.

The liquid discharged through the liquid phase outlet is pure carbon dioxide or high-concentration carbon dioxide, and may be transferred to a carbon dioxide demand site through a residual carbon dioxide line CL3.

Although not shown in the drawing, the membrane contactor 200 according to this embodiment may further include: an absorbent recycling unit (not shown) configured to recycle the absorbent through separation of carbon dioxide dissolved in the rich absorbent discharged from the liquid phase outlet to produce the lean absorbent.

The carbon dioxide separated from the rich absorbent by the absorbent recycling unit may be supplied to a carbon dioxide demand site through the residual carbon dioxide line CL3.

The lean absorbent produced by the absorbent recycling unit may be recirculated to the liquid phase inlet of the membrane contactor 200.

The carbon dioxide demand site according to this embodiment may include at least one of: a mixer 300 configured to mix carbon dioxide transferred from the ambient temperature membrane 100 through the high-concentration carbon dioxide line CL1 with carbon dioxide transferred from the membrane contactor 200 through the residual carbon dioxide line CL3; and a carbon dioxide liquefaction unit 400 configured to liquefy gaseous carbon dioxide captured by the ambient temperature membrane 100 and the membrane contactor 200.

When the carbon dioxide demand site includes both the mixer 300 and the carbon dioxide liquefaction unit 400, carbon dioxide mixed in the mixer 300 may be transferred to the carbon dioxide liquefaction unit 400 through a carbon dioxide liquefaction line CL4 connecting the mixer 300 to the carbon dioxide liquefaction unit 400.

In addition, the liquid carbon dioxide generated in the carbon dioxide liquefaction unit 400 may be transferred to a liquid carbon dioxide demand site, or may be stored in a carbon dioxide storage unit (not shown).

According to this embodiment, the carbon dioxide capture system may further include: a recirculation line RL through which non-condensed gaseous carbon dioxide not liquefied in the carbon dioxide liquefaction unit 400 is supplied back to the inlet of the ambient temperature membrane 100.

The concentration of carbon dioxide obtained from the permeate outlet of the ambient temperature membrane 100 may vary depending on the carbon dioxide concentration and pressure of the flue gas introduced through the inlet.

According to this embodiment, since the recirculation line RL is provided to supply the non-condensed carbon dioxide back to the inlet of the ambient temperature membrane 100, the carbon dioxide concentration and pressure at the inlet can be increased, thereby allowing more efficient carbon dioxide capture by the ambient temperature membrane 100.

Upon capturing carbon dioxide from flue gas with the same initial carbon dioxide concentration, providing the recirculation line RL to supply non-condensed carbon dioxide back to the inlet of the ambient temperature membrane 100 significantly increases the carbon dioxide concentration and pressure of the fluid introduced into the ambient temperature membrane 100, thereby ensuring a carbon dioxide capture rate of 90% or higher. Conversely, without the recirculation line RL provided to recirculate non-condensed carbon dioxide to the ambient temperature membrane 100, the carbon dioxide capture rate from the flue gas remains at a much lower level, only about 70%.

The ambient temperature membrane 100 does not involve a phase change, thus ensuring high energy savings and high throughput, compared to other typical separation processes. In addition, the ambient temperature membrane allows easy and simple operation and has enhanced selectivity. However, the ambient temperature membrane suffers from lower permeability and a lower separation factor than other typical separation processes. Conversely, the membrane contactor 200 operates by a similar mechanism to an absorption tower, thus enabling more efficient carbon dioxide capture than a separation membrane, and can provide a higher carbon dioxide absorption rate than an absorption tower due to a larger mass transfer surface area and the absence of channeling effects.

According to this embodiment, carbon dioxide in flue gas is primarily captured at a capture rate of about 50% to about 70% using the ambient temperature membrane 100 operating at ambient temperature, and then carbon dioxide in the residual flue gas from the ambient temperature membrane 100 is captured more thoroughly using the membrane contactor 200, followed by mixing carbon dioxide obtained from the permeate outlet of the ambient temperature membrane 100 with carbon dioxide obtained from the gas phase outlet (permeate outlet) of the membrane contactor 200, thereby obtaining high-concentration carbon dioxide.

In addition, according to this embodiment, the high-concentration carbon dioxide, obtained by mixing the carbon dioxide from the permeate section of the ambient temperature membrane 100 with carbon dioxide from the permeate section of the membrane contactor 200, is supplied to the carbon dioxide liquefaction unit 400 to ensure more efficient liquefaction, thereby allowing economical operation of the carbon dioxide capture system, despite the expense of the carbon dioxide liquefaction unit 400.

Furthermore, the carbon dioxide capture system according to this embodiment can be used not only for carbon dioxide capture, but also in acid gas removal processes, for example, SOx removal, by employing a membrane having selectivity for specific substances.

The carbon dioxide capture system according to this embodiment can reduce energy consumption and a required footprint, compared to typical carbon dioxide capture processes, while improving separation efficiency.

Although some embodiments have been described, it will be apparent to those skilled in the art that these embodiments are given by way of illustration only, and that various modifications, changes, alterations, and equivalent embodiments can be made without departing from the spirit and scope of the invention.

### <List of Reference numerals>

100: Ambient temperature membrane
200: Membrane contactor
300: Mixer
400: Carbon dioxide liquefaction unit
FL: Flue gas line
CL1: High-concentration carbon dioxide line
CL2: Low-concentration carbon dioxide line
CL3: Residual carbon dioxide line
CL4: Carbon dioxide liquefaction line
RL: Recirculation line
VL: Vent line

## Claims

1. A carbon dioxide capture system comprising:
an ambient temperature membrane configured to primarily capture carbon dioxide in flue gas transferred from a carbon emission source generating flue gas containing carbon dioxide;
a membrane contactor configured to secondarily capture carbon dioxide in residual flue gas remaining after primary separation and removal of carbon dioxide by the ambient temperature membrane, the membrane contactor capturing carbon dioxide by a different mechanism from the ambient temperature membrane; and
a mixer configured to mix the carbon dioxide separated by the ambient temperature membrane with the carbon dioxide separated by the membrane contactor to generate high-concentration carbon dioxide.

2. The carbon dioxide capture system according to claim 1, further comprising:
a carbon dioxide liquefaction unit configured to liquefy the high-concentration carbon dioxide generated by the mixer.

3. The carbon dioxide capture system according to claim 2, further comprising:
a recirculation line through which non-condensed carbon dioxide not liquefied in the carbon dioxide liquefaction unit is supplied back to the ambient temperature membrane to increase a pressure at an entrance through which the flue gas is introduced into the ambient temperature membrane.

4. The carbon dioxide capture system according to claim 1, wherein the ambient temperature membrane comprises:
a separation membrane operating at ambient temperature and allowing selective permeation of carbon dioxide;
an inlet through which the flue gas is introduced to one side of the separation membrane;
a permeate outlet disposed at the other side of the separation membrane and allowing high-concentration carbon dioxide having passed through the separation membrane to be discharged therethrough; and
a retentate outlet through which residual flue gas consisting of other components not passing through the separation membrane is discharged to be supplied to the membrane contactor.

5. The carbon dioxide capture system according to claim 1, wherein the membrane contactor comprises:
a gas phase passage through which the residual flue gas transferred from the ambient temperature membrane flows;
a liquid phase passage through which an absorbent flows; and
at least one contact membrane mediating contact between the absorbent and the residual flue gas while separating the liquid phase passage and the gas phase passage from each other.

6. The carbon dioxide capture system according to claim 5, wherein the membrane contactor further comprises:
a gas phase inlet through which the residual flue gas is introduced into the gas phase passage;
a gas phase outlet through which a venting gas resulting from removal of carbon dioxide from the residual flue gas by the absorbent is discharged from the gas phase passage;
a liquid phase inlet through which a lean absorbent is introduced into the liquid phase passage;
a liquid phase outlet through which a rich absorbent having carbon dioxide dissolved therein is discharged from the liquid phase passage;
a gas flow regulation unit provided to at least one of the gas phase inlet and the gas phase outlet to regulate a flow of gas; and
a liquid flow regulation unit provided to at least one of the liquid phase inlet and the liquid phase outlet to regulate a flow of liquid.

7. The carbon dioxide capture system according to claim 6, wherein capacity of the membrane contactor is adjusted by controlling at least one of the gas flow regulation unit and the liquid flow regulation unit.
